# EUROPÄISCHE PATENTSCHRIFT

(11) **EP 2 839 994 B1**
(45) Veröffentlichungstag und Bekanntmachung des Hinweises auf die Patenterteilung: **13.04.2016**
(21) Anmeldenummer: 13180998.0
(22) Anmeldetag: 20.08.2013
(51) Int. Cl.: B60R 13/04

(54) **Flügeltür mit einer Anschlagschutzeinrichtung**
Wing door with a stop protection device
Porte battante dotée d'un dispositif de protection contre le claquement

(43) Veröffentlichungstag der Anmeldung: 25.02.2015
(73) Patentinhaber: Andrä, Peter, 85991 Vaterstetten (DE)
(72) Erfinder: Andrä, Peter, 85991 Vaterstetten (DE)
(74) Vertreter: Fischer, Ernst

(56) Entgegenhaltungen:
- DE-A1-102006 056 396
- DE-U1- 20 019 998
- FR-A1- 2 802 570

## Beschreibung

Die Erfindung betrifft eine Flügeltür mit einem Türblatt und einer Anschlagschutzeinrichtung, mit der ein Anschlagschutz der Türblattkante beim Öffnen der Flügeltür bewerkstelligbar ist.

Eine Flügeltür weist ein Türblatt und eine Zarge auf, wobei das Türblatt mit Scharnieren an der Zarge verschwenkbar angelenkt ist. Befindet sich das Türblatt in der Geschlossenstellung, ist das Türblatt innerhalb der Zarge angeordnet, wobei zwischen dem Türblatt und der Zarge ein Spiel in Form einer Fuge vorgesehen ist. Die Flügeltür hat eine Öffnungsrichtung, in die das Türblatt um die Scharniere verschwenkbar ist, so dass die Flügeltür an der den Scharnieren abgewandten Türblattstirnseite sich öffnet. Dadurch ragt das Türblatt mit seiner Türblattstirnseite von der Zarge weg in den Raum, wobei das Türblatt nur so weit verschwenkt werden kann, bis es in der Regel mit seiner Türblattkante an ein Hindernis stößt.

Die Problematik stellt sich insbesondere bei einer Kraftfahrzeugtür, beispielsweise eines Pkw, wenn das Kraftfahrzeug bei beengten Platzverhältnissen, wie beispielsweise in einer Garage, geparkt ist. Hierbei besteht die Gefahr, dass, wenn die Kraftfahrzeugtür geöffnet wird, die Kraftfahrzeugtür mit ihrer Türblattkante an eine Garagenwand versehentlich geschlagen wird, wodurch Lackschäden oder gar Verbeulungen an der Kraftfahrzeugtür die Folge sein können. Des Weiteren besteht die Gefahr, wenn zwei Kraftfahrzeuge beispielsweise auf einem öffentlichem Parkplatz nebeneinander geparkt sind, dass beim unkontrollierten Öffnen der Tür des einen Kraftfahrzeugs diese an das andere Kraftfahrzeug gestoßen wird, wodurch das andere Kraftfahrzeug ebenfalls Schaden nehmen kann.

Um die Folgen des Anschlagens der Kraftfahrzeugtür an die Garagenwand zumindest zu mildern ist es bekannt, an der Garagenwand eine Polsterung in Form etwa eines Filzbelags anzubringen. Der Filzbelag hat jedoch nur dann eine Schutzwirkung, wenn das Kraftfahrzeug bezogen auf den Filzbelag derart geparkt ist, dass die Kraftfahrzeugtür beim Öffnen auf den Filzbelag trifft. Trifft dagegen die Kraftfahrzeugtür neben dem Filzbelag auf die Garagenwand, so ist wiederum bei entsprechend schwungvollem Öffnen der Kraftfahrzeugtür mit einer Beschädigung derselben zu rechnen.

Außerdem ist es bekannt, die Kraftfahrzeugtür an ihrer Türblattkante mit einer Gummilippe zu verkleiden, so dass beim Anschlagen der Kraftfahrzeugtür an die Garagenwand die Türblattkante von der Gummilippe gestützt ist. Die Gummilippe ist auch bei der geschlossenen Kraftfahrzeugtür von außerhalb des Kraftfahrzeugs sichtbar und kann die Erscheinung des Kraftfahrzeugs stören.

FR 2802570 betrifft eine Schutzvorrichtung für eine Kraftfahrzeugtür, um die Außenseite der Karosserie des Kraftfahrzeugs gegen einen Schlag zu schützen, wenn sie sich in ihrem offenen Zustand befindet.

Aufgabe der Erfindung ist es, eine Flügeltür mit einem Türblatt und einer Anschlagschutzeinrichtung zu schaffen, wobei die Anschlagschutzeinrichtung bei der geschlossenen Flügeltür so gut wie nicht in Erscheinung tritt und dennoch mit der Anschlagschutzeinrichtung ein effektiver Anschlagschutz für das Türblatt bewerkstelligbar ist.

Die erfindungsgemäße Flügeltür weist ein Türblatt, eine Zarge und eine Anschlagschutzeinrichtung auf, die an der den Scharnieren der Flügeltür abgewandten Stirnseite des Türblatts angebaut ist sowie eine Schubstange und einen in die und entgegen der Öffnungsrichtung der Flügeltür verschwenkbar angelenkten Hebel aufweist, der in seiner Einschwenkstellung bei der geschlossenen Flügeltür in einer Fuge zwischen der Stirnseite und der Zarge angeordnet ist und, sobald beim öffnen der Flügeltür der Hebel von der Zarge freigelegt ist, in seiner Ausschwenkstellung von der Stirnseite mit seinem einen Hebelarm vorsteht, so dass mit ihm ein Anschlagschutz der Türblattkante beim öffnen der Flügeltür bewerkstelligt ist, wobei der andere Hebelarm mit dem einen Längsende der Schubstange gekuppelt ist und dessen anderes Längsende mit einem an der Zarge angebrachten Mitnehmer gekuppelt ist, so dass beim Öffnen der Flügeltür der Hebel von der Einschwenkstellung in die Ausschwenkstellung und beim Schließen der Flügeltür der Hebel von der Ausschwenkstellung in die Einschwenkstellung von dem Mitnehmer via die Schubstange getrieben ist.

Die Aufgabe wird gelöst mit den Merkmalen des Patentannspruchs 1. Bevorzugte Ausgestaltungen dazu sind in den weiteren Patentansprüchen angegeben.

Dadurch, dass die Anschlagschutzeinrichtung bei der geschlossenen Flügeltür in der Fuge zwischen der Stirnseite des Türblatts und der Zarge angeordnet ist, tritt die Anschlagschutzeinrichtung nur äußerlich in Erscheinung, wenn die Flügeltür geöffnet ist. Im Gegensatz dazu tritt die Anschlagschutzeinrichtung bei der geschlossenen Flügeltür äußerlich nicht in Erscheinung, so dass die Anschlagschutzeinrichtung etwa die Gestaltung der Flügeltür nicht beeinträchtigen kann. Dies wird dadurch erreicht, dass der Hebel von seiner Einschwenkstellung in seine Auschwenkstellung beim Öffnen der Flügeltür und umgekehrt beim Schließen der Flügeltür bringbar ist, wobei der Hebel in seiner Einschwenkstellung versteckt in der Fuge angeordnet ist und in seiner Ausschwenkstellung zum Bewerkstelligen des Anschlagschutzes für die Flügeltür von dem Türblatt vorsteht.

Der Hebel wird von der Einschwenkstellung in die Ausschwenkstellung und umgekehrt von dem Mitnehmer via die Schubstange getrieben, wobei der Mitnehmer an der Zarge angebracht ist. Dadurch wird die Arbeit, die zum Öffnen und Schließen der Flügeltür auf das Türblatt zu übertragen ist, verwendet, um den Hebel zu betätigen, nämlich von der Einschwenkstellung in die Ausschwenkstellung und umgekehrt zu bringen.

Beim Öffnen und Schließen der Flügeltür wird das Türblatt relativ zur Zarge und somit auch zum Mitnehmer bewegt, wobei der Hebel via die Schubstange an dem Mitnehmer abgestützt ist.

Die Schubstange und der Mitnehmer sind bezüglich der geometrischen Ausgestaltung und ihrer Positionen derart aufeinander abgestimmt, dass sobald beim Öffnen der Flügeltür der Hebel von der Zarge freigelegt ist, der Hebel in seine Ausschwenkstellung gebracht wird. Analog ist der Hebel in seine Einschwenkstellung gebracht, sobald beim Schließen der Flügeltür der Hebel von der Zarge nicht mehr freigelegt ist. Dadurch wird mit dem Mitnehmer via die Schubstange der Hebel in Abhängigkeit der Relativposition des Türblatts bezogen auf die Zarge betätigt, wodurch die Anschlagschutzeinrichtung durch Ausschwenken des Hebels beim Öffnen der Flügeltür in einen Aktivzustand und bei der geschlossenen Flügeltür in einen Passivzustand gebracht ist. Im Passivzustand tritt die Anschlagschutzeinrichtung von außerhalb nicht in Erscheinung.

Die Anschlagschutzeinrichtung weist bevorzugtermaßen ein erstes Vorspannmittel auf, das an dem Türblatt abgestützt ist und an dem Hebel angreift, so dass, sobald der Hebel von der Zarge freigelegt und der Hebel von dem Mitnehmer entkoppelt ist, der Hebel von dem ersten Vorspannmittel in der Ausschwenkstellung gehalten ist. Somit ist der Hebel in der Ausschwenkstellung von dem Vorspannmittel vorgespannt, so dass, wenn das Türblatt mit dem Hebel beispielsweise an eine Wand stößt, das Türblatt von dem Vorspannmittel abgefedert wird. Dadurch ist vorteilhaft unterbunden, dass etwa beim Anschlagen des Türblatts an die Wand derart starke Schläge auftreten, die die Anschlagschutzeinrichtung und/oder das Türblatt beschädigen können. Außerdem wird mit dem ersten Vorspannmittel vorteilhaft erreicht, dass der Hebel sicher in der Ausschwenkstellung gehalten ist, obwohl der Hebel von dem Mitnehmer entkoppelt ist. Bevorzugtermaßen ist das erste Vorspannmittel als eine Schraubenfeder oder eine Torsionsfeder ausgebildet.

Außerdem ist es bevorzugt, dass die Anschlagschutzeinrichtung ein zweites Vorspannmittel aufweist, das an der Zarge abgestützt ist und an dem Mitnehmer angreift, wobei diejenige resultierende Vorspannkraft zum Verschwenken des Hebels, die von dem zweiten Vorspannmittel an dem Hebel angreift, größer ist als diejenige resultierende Vorspannkraft zum Verschwenken des Hebels, die von dem ersten Vorspannmittel an dem Hebel angreift, so dass, solange der Hebel von der Zarge nicht freigelegt ist, der Hebel via den Mitnehmer und die Schubstange von dem zweiten Vorspannmittel in die Einschwenkstellung getrieben ist. Hierbei ist es bevorzugt, dass das zweite Vorspannmittel als eine Schraubenfeder ausgebildet ist. Bevorzugtermaßen greifen das erste Vorspannmittel an der Schubstange und das zweite Vorspannmittel via den Mitnehmer an der Schubstange an. Somit wird der Hebel via die Schubstange betätigt, wobei das erste Vorspannmittel und das zweite Vorspannmittel mit ihren Vorspannkräften auf die Schubstange einwirken. Dabei stehen das erste Vorspannmittel und das zweite Vorspannmittel miteinander derart in Wechselwirkung, dass, wenn der Mitnehmer an der Schubstange anliegt, das zweite Vorspannmittel das erste Vorspannmittel zurückdrängt und der Hebel letztlich von dem zweiten Vorspannmittel in der Einschwenkstellung gehalten ist. Sobald die Schubstange von dem Mitnehmer entkoppelt ist, wirkt das zweite Vorspannmittel nicht mehr auf die Schubstange ein, so dass lediglich das erste Vorspannmittel an der Schubstange angreift und somit der Hebel in der Ausschwenkstellung von dem ersten Vorspannmittel gehalten ist.

Es ist bevorzugt, dass der Mitnehmer als ein Mitnehmerschlitten ausgeführt ist, der unter Überwinden der Vorspannkraft des zweiten Vorspannmittels an der Zarge längsverschiebbar ist und an dem ihm zugeordneten Längsende der Schubstange anliegt, solange der Hebel von der Zarge nicht freigelegt ist, und der von dem ihm zugeordneten Längsende der Schubstange im Abstand angeordnet ist, sobald der Hebel von der Zarge freigelegt ist. Das Türblatt weist bevorzugt einen Mitnehmeranschlag auf, der derart angeordnet ist, dass, sobald der Hebel von der Zarge freigelegt ist, der Mitnehmer an dem Mitnehmeranschlag anliegt. Somit wird mit dem Mitnehmeranschlag erreicht, dass, wenn beim Öffnen der Flügeltür der Hebel von der Zarge freigelegt ist und der Mitnehmer an dem Mitnehmeranschlag anliegt, das zweite Vorspannmittel von der Schubstange entkoppelt ist und dadurch lediglich das erste Vorspannmittel an der Schubstange angreift.

Der Mitnehmerschlitten ist an der Zarge und verschiebbar zu dieser angeordnet, bis der Mitnehmerschlitten an dem Mitnehmeranschlag anliegt. Ferner wird beim Schließen der Flügeltür der Mitnehmerschlitten von der Schubstange entgegen der Vorspannkraft des zweiten Vorspannmittels relativ zur Zarge verschoben, wenn der Hebel von der Zarge nicht freigelegt ist. Sobald der Hebel von der Zarge freigelegt ist, liegt der Mitnehmerschlitten an dem Mitnehmeranschlag an und beim Öffnen der Flügeltür wird die Schubstange von dem Mitnehmerschlitten weg bewegt.

Alternativ ist es bevorzugt, dass der Mitnehmer als ein Drückerdorn ausgeführt ist, der unter Überwinden der Vorspannkraft des zweiten Vorspannmittels in die Zarge versenkbar ist und an dem ihm zugeordneten Längsende der Schubstange anliegt, solange der Hebel von der Zarge nicht freigelegt ist, und der von dem ihm zugeordneten Längsende der Schubstange im Abstand angeordnet ist, sobald der Hebel von der Zarge freigelegt ist. Ferner ist es alternativ bevorzugt, dass der Mitnehmer als ein Schwenkstift ausgeführt ist, der unter Überwinden der Vorspannkraft des zweiten Vorspannmittels an der Zarge verschwenkbar ist und an dem ihm zugeordneten Längsende der Schubstange anliegt, solange der Hebel von der Zarge nicht freigelegt ist, und der von dem ihm zugeordneten Längsende der Schubstange im Abstand angeordnet ist, sobald der Hebel von der Zarge freigelegt ist. Außerdem ist es alternativ bevorzugt, dass der Mitnehmer als ein Kompressionsblock ausgeführt ist, der unter Überwinden der Vorspannkraft des zweiten Vorspannmittels an der Zarge komprimierbar ist und an dem ihm zugeordneten Längsende der Schubstange anliegt, solange der Hebel von der Zarge nicht freigelegt ist, und der von dem ihm zugeordneten Längsende der Schubstange im Abstand angeordnet ist, sobald der Hebel von der Zarge freigelegt ist.

Außerdem ist es bevorzugt, dass der eine Hebelarm, der in der Ausschwenkstellung des Hebels von der Stirnseite des Türblatts vorsteht, so dass mit ihm der Anschlagschutz der Türblattkante beim Öffnen der Flügeltür bewerkstelligt ist, ein Polster aufweist, das bei der geöffneten Flügeltür von der Zarge abgewandt angeordnet ist. Mit dem Polster wird beim Anschlagen des Türblatts an eine Wand der dadurch entstehende Stoß abgeschwächt, so dass sowohl die Gefahr einer Beschädigung der Wand als auch der Anschlagschutzeinrichtung bzw. des Türblatts vermindert ist.

Ferner ist es bevorzugt, dass in der Stirnseite des Türblatts ein Einbauhohlraum vorgesehen ist, in dem die Anschlagschutzeinrichtung eingebaut ist, so dass, wenn der Hebel in seiner Einschwenkstellung ist, die Anschlagschutzeinrichtung so gut wie innerhalb des Bauraums angeordnet ist. Aus dem Enbauhohlraum steht lediglich das Längsende der Schubstange vor, das mit dem Mitnehmer wechselwirkt. Bei der geschlossenen Flügeltür überbrückt dieses Längsende die Fuge, weil dieses Längsende von der Stirnseite des Türblatts vorsteht und an dem Mitnehmer anliegt.

Die Flügeltür ist bevorzugt die Tür eines Kraftfahrzeugs. Mit der Anschlagschutzeinrichtung ist besonders vorteilhaft die Tür des Kraftfahrzeugs, geschützt, da der Anschlagschutz durch die Anschlagsnhutzeinrichtung insbesondere bei beengten Parkverhältnissen des Kraftfahrzeugs wünschenswert ist. Außerdem ist die Tür des Kraftfahrzeugs in der Regel aus lackiertem Blech hergestellt, wobei ohne der Anschlagschutzeinrichtung die Gefahr des Abplatzens von Lack und des Verbiegens des Blechs besteht.

Im Folgenden wird die Erfindung anhand einer bevorzugten Ausführungsform mit Bezugnahme auf die Zeichnungen erläutert. Es zeigen:
Figur 1 eine Querschnittsdarstellung der bevorzugten Ausführungsform der erfindungsgemäßen Flügeltür mit der Anschlagschutzeinrichtung,
Figuren 2 bis 6 das Detail aus Figur 1 mit der Anschlagschutzeinrichtung, wobei in Figur 2 der Hebel in der Einschwenkstellung, in Figuren 5 und 6 der Hebel in der Ausschwenkstellung und in Figuren 3 und 4 der Hebel in Zwischenstellungen gezeigt ist, und
Figuren 7 und 8 dreidimensionale Ansichten der Anschlagschutzeinrichtung, wobei in Figur 7 der Hebel in der Einschwenkstellung und in Figur 8 der Hebel in der Ausschwenkstellung gezeigt ist.

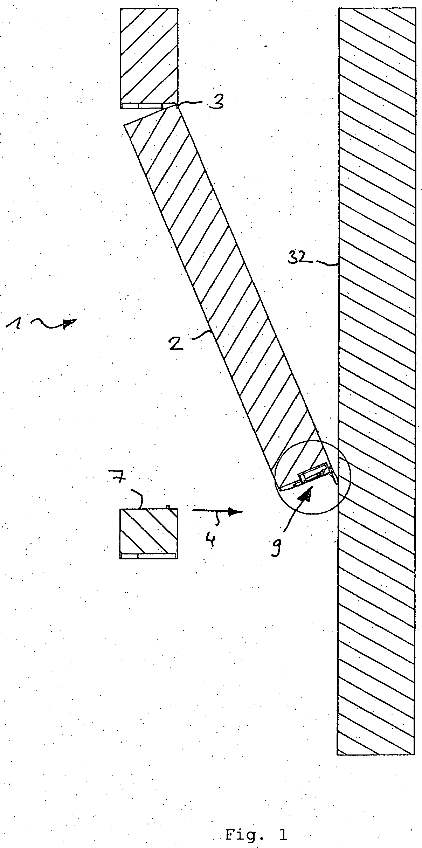

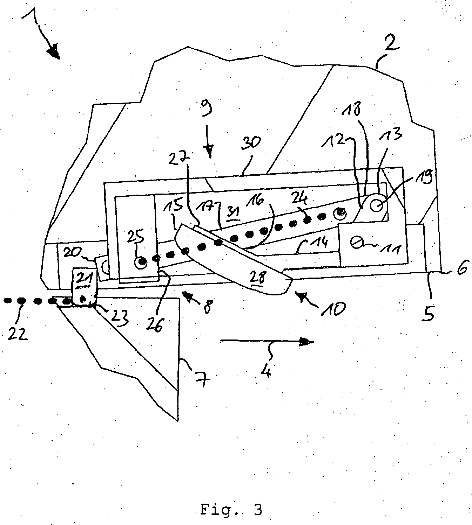

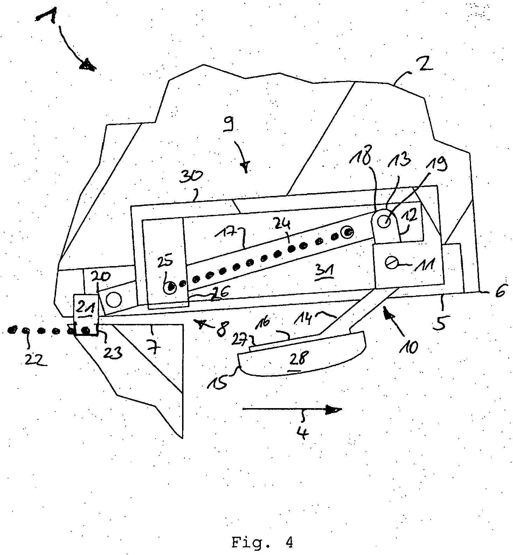

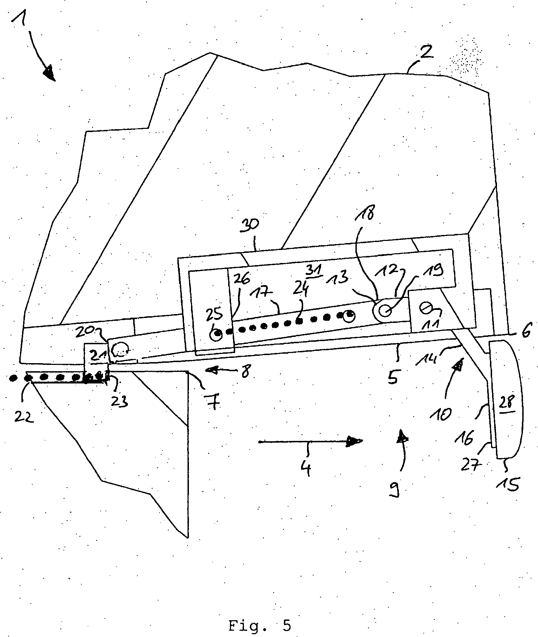

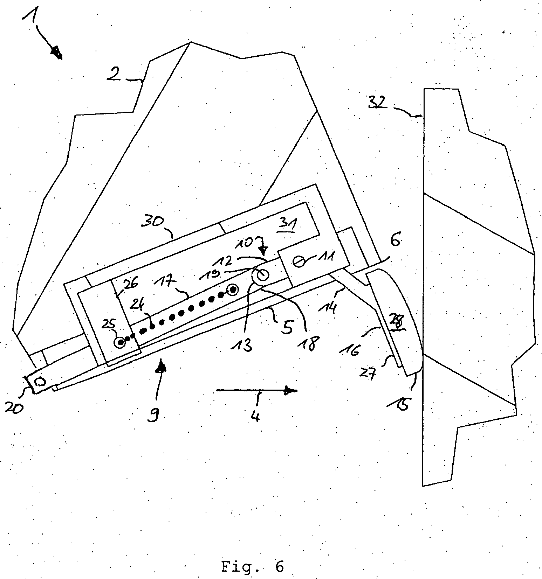

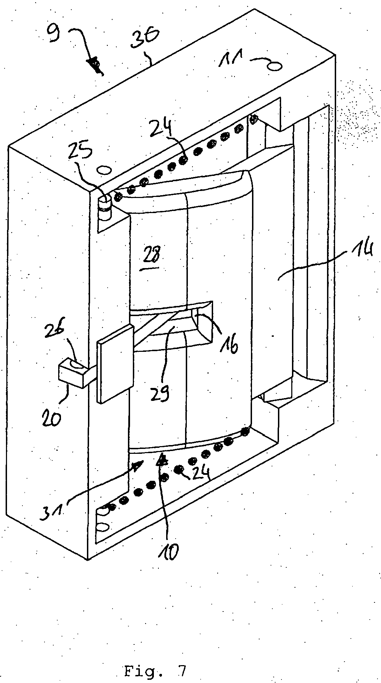

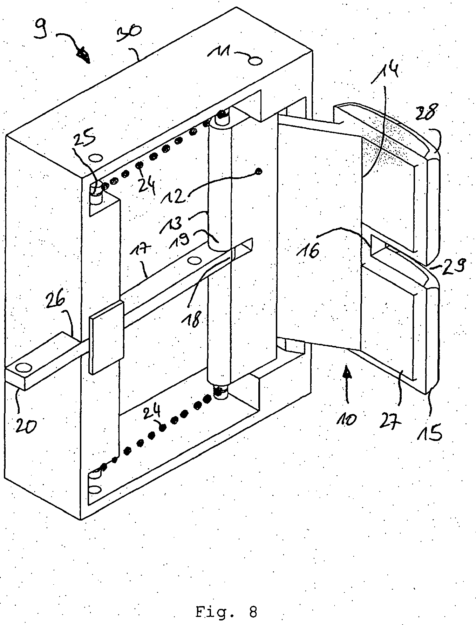

Wie es aus Figuren 1 bis 8 ersichtlich ist, weist eine Flügeltür 1 ein Türblatt 2 auf. Das Türblatt 2 ist mit Scharnieren 3 versehen, so dass das Türblatt 3 um die Scharniere 3 in eine Öffnungsrichtung 4 verschwenkbar ist. An der den Scharnieren 3 abgewandten Türblattstirnseite 5 ist eine Türblattkante 6 angeordnet, die beim Öffnen der Flügeltür 1 diese der Gefahr eines Anschlagens ausgesetzt ist. Ferner weist die Flügeltür 1 eine Zarge 7 auf, in die das Türblatt 2 mit ihren Scharnieren 3 eingebaut ist. Ist die Flügeltür 1 geschlossen, so ist das Türblatt 2 innerhalb der Zarge 7 derart angeordnet, dass zwischen der Zarge 7 und dem Türblatt 2 lediglich eine Fuge 8 ausgebildet ist. Beim Öffnen der Flügeltür 1 wird das Türblatt 2 um die Scharniere 3 in die Öffnungsrichtung 4 verschwenkt, so dass die Türblattkante 6 von der Zarge 7 entfernt wird.

Die Flügeltür 1 weist ferner eine Anschlagschutzeinrichtung 9 auf, die an der Türblattstirnseite 5 angeordnet ist. Die Anschlagschutzeinrichtung weist einen Hebel 10 auf, der um ein Lager 11 verschwenkbar an dem Türblatt 2 gelagert ist, so dass an dem Hebel 10 ein Innenhebelarm 12 mit einem Längsende 13 und ein Außenhebelarm 14 mit einem Längsende 15 ausgebildet sind. Der Innenhebelarm 12 und der Außenhebelarm 13 sind in einem Winkel zueinander angeordnet, der kleiner als 180° ist. Dadurch, dass der Hebel um das Lager 11 verschwenkbar gelagert ist, ist der Hebel 10 in eine Einschwenkstellung und in eine Ausschwenkstellung bringbar. In der Einschwenkstellung ist der Innenhebelarm 12 im Wesentlichen senkrecht zur Türblattstirnseite 5 angeordnet, wohingegen der Außenhebelarm 14 im Wesentlichen parallel zur Türblattstirnseite 5 angeordnet ist. In der Ausschwenkstellung des Hebelarms 10 ist der Innenhebelarm 12 im Wesentlichen parallel zur Türblattinnenseite 5 angeordnet und der Außenhebelarm 14 ist im Wesentlichen senkrecht zur Türblattstirnseite 5 angeordnet.

Ferner weist die Anschlagschutzeinrichtung 9 eine Schubstange 17 auf, die eine Innenlängsseite 18 aufweist, die mittels eines Gelenks 19 am Längsende 13 des Innenhebelarms 12 angelenkt ist. Ist der Hebel 10 in einer Einschwenkstellung, so erstreckt sich die Schubstange 17 im Wesentlichen parallel zum Hebel 10. An dem Außenhebelarm 14 ist ein Hebelanschlag 16 vorgesehen, der, wenn der Hebel 10 in der Einschwenkstellung ist, an der Schubstange 17 anliegt, wodurch die relative Lage der Schubstange 17 bezogen auf den Hebel 10 definiert ist.

Dem Innenlängsende 18 der Schubstange 17 abgewandt weist die Schubstange 17 ein Außenlängsende 20 auf. Die Anschlagschutzeinrichtung 9 weist ferner einen Mitnehmerschlitten 21 auf, der an der Zarge verschiebbar angebracht ist. An der Zarge 7 und an dem Mitnehmerschlitten 21 ist eine Druckfeder 22 als ein Vorspannmittel abgestützt, so dass die Druckfeder 22 den Mitnehmerschlitten 21 in die Öffnungsrichtung 4 vorspannt. In der Zarge 7 ist ein Mitnehmeranschlag 23 vorgesehen, an dem der Mitnehmerschlitten 21 unter der Vorspannung der Druckfeder 22 anlegbar ist.

Ist der Hebel 10 in seiner Einschwenkstellung, so ist der Hebel 10 bei der geschlossenen Flügeltür 1 innerhalb der Fuge 8 angeordnet. Die Schubstange 17 ist zwischen dem Hebel 10 und der Zarge 7 angeordnet, wobei das Außenlängsende 20 der Schubstange 17 an dem Mitnehmerschlitten 21 anliegt. Somit ist die Schubstange 17 von der Druckfeder 22 via den Mitnehmerschlitten 21 vorgespannt. Dadurch, dass die Schubstange 17 an dem Gelenk 19 an dem Innenhebelarm 12 angelenkt ist, wirkt auf den Hebel 10 um das Lager 11 ein Moment mit einer derartigen Drehrichtung, dass der Außenhebelarm 14 in Richtung zu der Schubstange 17 gedrückt ist und in der Einschwenkstellung mit dem Hebelanschlag 16 an der Schubstange 17 anliegt.

Die Anschlagschutzeinrichtung 9 weist außerdem eine Zugfeder 24 als ein Vorspannmittel auf, die an einem Zugfederanker 25, der an dem Türblatt 2 befestigt ist und an der Schubstange 17 angreift. Die Zugfeder 24 wirkt an der Schubstange 17 der Druckfeder 22 beim Verschwenken des Hebels 10 um das Lager 11 entgegen. Somit greifen von der Druckfeder 22 und der Zugfeder 24 erzeugte Vorspannkräfte an der Schubstange 17 an, die unter dem Zusammenwirken des Gelenks 19 und des Innenhebelarms 12 in ein Verschwenken des Außenhebelarms 14 resultieren. Die zum Verschwenken des Hebels 10 um das Lager 11 resultierenden Vorspannkräfte der Druckfeder 22 und der Zugfeder 24 sind derart, dass die resultierende Vorspannkraft der Druckfeder 22 größer ist als die resultierende Vorspannkraft der Zugfeder 24.

Beim Verschieben der Schubstange 17 ist diese in einer Schubstangenlängsführung 26 der Anschlagschutzeinrichtung 9 längsgeführt, wobei das Außenlängsende 20 der Schubstange 17 eine Translationsbewegung und das Innenlängsende 18 der Schubstange 17 eine Rotationsbewegung durchführt.

In der Zarge 7 ist ein Mitnehmeranschlag 23 vorgesehen, mit dem die Längsverschiebbarkeit des Mitnehmerschlittens 21 begrenzt ist. Der Mitnehmeranschlag 23 ist derart in der Zarge 7 angeordnet, dass, wenn der Mitnehmerschlitten 21 an dem Außenlängsende 20 der Schubstange 17 anliegt, der Mitnehmerschlitten 21 beim Öffnen der Flügeltür 1 in die Öffnungsrichtung 4 verschoben wird, bis die Flügeltür 1 derart weit geöffnet ist, dass der Hebel 10 von der Zarge 7 freigelegt ist. In diesem Öffnungsgrad der Flügeltür 1 liegt der Mitnehmerschlitten 21 an dem Mitnehmeranschlag 23 an, so dass bei weiterem Öffnen der Flügeltür 1 der Mitnehmerschlitten 21 von dem Außenlängsende 20 der Schubstange 17 entkoppelt ist. Beim Schließen der Flügeltür 1 ist das Außenlängsende 20 der Schubstange 17 von dem Mitnehmerschlitten 21 entkoppelt, solange der Hebel 10 von der Zarge 7 freigelegt ist. In derjenigen Stellung, in der der Hebel 10 von der Zarge 7 gerade nicht mehr freigelegt ist, liegt das Außenlängsende 20 der Schubstange 17 an dem Mitnehmerschlitten 21 an.

Der Außenhebelarm 14 weist eine Polsterplatte 27 auf, auf der ein Polster 28 angebracht ist. Ferner ist in der Polsterplatte 27 und dem Polster 28 ein Schlitz 29 vorgesehen, in den die Schubstange 17 in der Einschwenkstellung des Hebels 10 eingreift, so dass vom Grund des Schlitzes 29 der Hebelanschlag 16 gebildet ist.

Ferner weist die Anschlagschutzeinrichtung 9 ein Gehäuse 30 auf, in das der Hebel 10 und die Schubstange 17 eingebaut sind. Hierbei ist das Lager 11 an das Gehäuse 30 gekuppelt und die Zugfeder 25 fest mit dem Gehäuse 30 verbunden. Außerdem ist das Gehäuse 30 derart groß ausgebildet, dass, wenn der Hebel 10 in der Einschwenkstellung ist, der Hebel 10 und die Schubstange 17 in dem Gehäuse 30 untergebracht sind. Das Gehäuse 30 weist eine Öffnung auf, durch die die Schubstange 17 sich erstreckt, so dass die Öffnung als die Schubstangenlängsführung 26 eingerichtet ist.

Entsprechend der Außendimensionen des Gehäuses 30 ist in der Türblattstirnseite 5 des Türblatts 2 ein Einbauhohlraum 31 vorgesehen, in dem das Gehäuse 30 eingebaut ist. Der Einbauhohlraum 31 ist derart dimensioniert, dass das Gehäuse 30 vollständig in dem Einbauhohlraum 31 untergebracht ist.

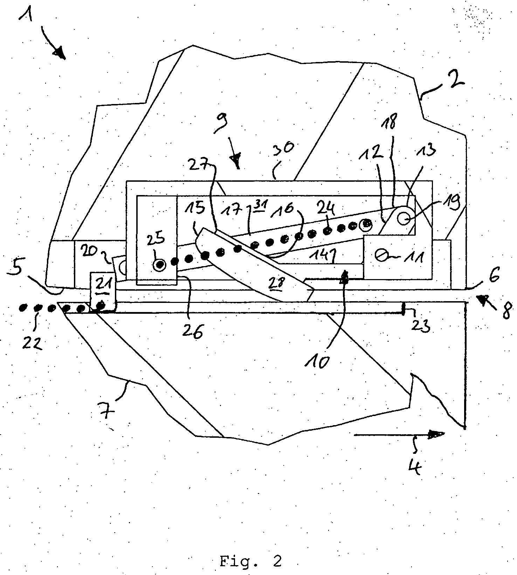

Ist die Flügeltür 1 geschlossen, ist das Türblatt 2 in der Zarge 7 passend angeordnet, so dass zwischen der Zarge 7 und dem Türblatt 2 eine Fuge 8 verbleibt. Der Mitnehmerschlitten 21 ist im Abstand von dem Mitnehmeranschlag 23 angeordnet und liegt am Außenlängsende 20 der Schubstange 17 an. Der Mitnehmerschlitten 21 ist von der Druckfeder 22 vorgespannt, so dass diese Vorspannung von dem Mitnehmerschlitten 21 auf das Außenlängsende der Schubstange 17 übertragen wird. Die Zugfeder 24 wirkt dieser Vorspannung der Schubstange 17 entgegen, ist jedoch schwächer, so dass von der Schubstange 17 via das Gelenk 19 auf den Innenhebelarm 12 des Hebels 10 in Figur 2 ein Moment in Richtung im Uhrzeigersinn übertragen wird. Dadurch ist der Hebel 10 in die Einschwenkstellung getrieben, so dass der Hebel 10 zusammen mit der Schubstange 17 im Inneren des Gehäuses 30 angeordnet ist. Aus dem Gehäuse 30 steht durch die Schubstangenlängsförderung 26 lediglich das Außenlängsende 20 der Schubstange 17 vor, das den Mitnehmerschlitten 21 kontaktiert.

Beim Öffnen der Flügeltür 1 wird das Türblatt 2 in die Öffnungsrichtung 4 bewegt, so dass die Anschlagschutzeinrichtung 9 in dem Türblatt 2 relativ zur Zarge 7 ebenfalls in die Öffnungsrichtung 4 bewegt wird. Dabei folgt der Mitnehmerschlitten 21 unter Kontaktierung des Außenlängsendes 20 der Schubstange 17 dieser aufgrund der Vorspannkraft der Druckfeder 22. Die geschieht so lange, bis der Mitnehmerschlitten 21 an dem Mitnehmeranschlag 23 anstößt, so dass bei weiterem Öffnen der Flügeltür 1 der Mitnehmerschlitten 21 nicht mehr mit dem Türblatt 2 mitgeführt wird. Unter Einwirkung der Vorspannung der Zugfeder 24 bleibt die Schubstange 17 mit ihrem Außenlängsende 20 an dem Mitnehmerschlitten 21 angelegt, wobei der Hebel 10 um das Lager 11 mit einem Moment entgegen des Uhrzeigersinns verschwenkt wird. Dabei wird der Hebel 10 von seiner Einschwenkstellung in seine Ausschwenkstellung gebracht, wie es in Figuren 2 bis 5 gezeigt ist. In dem Augenblick, in dem der Hebel 10 gerade seine Ausschwenkstellung erreicht, ist das Außenlängsende 20 der Schubstange 17 gerade noch mit dem Mitnehmerschlitten 21 in Kontakt, wobei der Außenhebelarm 14 im Wesentlichen senkrecht von der Türblattstirnseite 5 vorsteht. Beim weiteren Öffnen der Flügeltür bewegt sich das Außenlängsende 20 der Schubstange 17 von dem Mitnehmerschlitten 21 weg, wobei der Hebel 10 von der Zugfeder 24 stabil in der Ausschwenkstellung gehalten wird. Der Außenhebelarm 14 ist in Verlängerung zum Türblatt 2 vor der Türblattkante 6 angeordnet, so dass, wenn das Türblatt 2 Gefahr läuft an eine Wand 32 anzuschlagen, statt der Türblattkante 6 zuerst das Längsende 15 des Außenhebelarms 14 an der Wand 32 anschlägt. Somit ist es unterbunden, dass die Türblattkante 6 direkt an der Wand 32 anschlägt, so dass eine eventuelle Beschädigung der Türblattkante 6 vermieden ist. Dadurch, dass die Anschlagschutzeinrichtung 9 mit ihrem Polster 28 an der Wand 32 anschlägt, ist eine übermäßige mechanische Beanspruchung der Wand 32 unterbunden, so dass eine eventuelle Beschädigung der Wand 32 vermieden ist.

Beim Schließen der Flügeltür 1 wird das Türblatt 2 wieder in Richtung entgegen der Öffnungsrichtung 4 zur Zarge 7 hin verschwenkt. Solange der Hebel 10 von der Zarge 7 freigelegt ist, sind das Außenlängsende 20 der Schubstange 17 und der Mitnehmerschlitten 21 im Abstand zueinander angeordnet. Bei weiterem Schließen der Flügeltür 1 trifft schließlich das Außenlängsende 20 der Schubstange 17 auf den Mitnehmerschlitten 21, wodurch aufgrund der stärkeren Vorspannungswirkung der Druckfeder 22 verglichen mit der Zugfeder 24 von der Schubstange 17 ein Moment auf den Hebel 10 ausgeübt wird, das im Uhrzeigersinn wirkt. Dabei wird bei weiterem Schließen der Flügeltür 1 der Hebel 10 von seiner Ausschwenkstellung in seine Einschwenkstellung gebracht, wobei der Mitnehmerschlitten 21 stets an dem Mitnehmeranschlag 23 anliegt.

Die Einschwenkstellung des Hebels 10 wird erreicht, wobei der Hebel 10 von der Zarge 7 gerade noch freigelegt ist. Der Hebel 10 wird mit seinem Hebelanschlag 16 an die Schubstange 17 gedrückt, wodurch der Hebel 10 in seiner Einschwenkstellung ist. Dadurch, dass der Hebelanschlag 16 ein weiteres Verschwenken des Hebels 10 unterbindet, wird von der Schubstange 17 der Mitnehmerschlitten 21 entgegen der Öffnungsrichtung 4 und der Einfluss der Vorspannung durch die Zugfeder 22 verschoben. Dies setzt sich so lange fort, bis die Flügeltür 1 vollständig geschlossen ist. Im geschlossenen Zustand der Flügeltür ist die Anschlagschutzeinrichtung 9 vollständig zwischen der Fuge 8 angeordnet, so dass die Anschlagschutzeinrichtung 9 von außerhalb der Flügeltür 1 so gut wie nicht einsehbar ist.

### Bezugszeichenliste

- 1: Flügeltür
- 2: Türblatt
- 3: Scharnier
- 4: Öffnungsrichtung
- 5: Türblattstirnseite
- 6: Türblattkante
- 7: Zarge
- 8: Fuge
- 9: Anschlagschutzeinrichtung
- 10: Hebel
- 11: Lager
- 12: Innenhebelarm
- 13: Längsende des Innenhebelarms
- 14: Außenhebelarm
- 15: Längsende des Außenhebelarms
- 16: Hebelanschlag
- 17: Schubstange
- 18: Innenlängsende der Schubstange
- 19: Gelenk
- 20: Außenlängsende der Schubstange
- 21: Mitnehmerschlitten
- 22: Druckfeder
- 23: Mitnehmeranschlag
- 24: Zugfeder
- 25: Zugfederanker
- 26: Schubstangenlängsführung
- 27: Polsterplatte
- 28: Polster
- 29: Schlitz
- 30: Gehäuse
- 31: Einbauhohlraum
- 32: Wand

## Patentansprüche

1. Flügeltür (1) mit einem Türblatt (2), einer Zarge (7) und einer Anschlagschutzeinrichtung (9), die an der den Scharnieren (3) der Flügeltür (1) abgewandten Stirnseite (5) des Türblatts (2) angebaut ist sowie eine Schubstange (17) und einen in die und entgegen der Öffnungsrichtung (4) der Flügeltür (1) verschwenkbar angelenkten Hebel (10) aufweist, der in seiner Einschwenkstellung bei der geschlossenen Flügeltür (1) in einer Fuge (8) zwischen der Stirnseite (5) und der Zarge (7) angeordnet ist und, sobald beim Öffnen der Flügeltür (1) der Hebel (10) von der Zarge (7) freigelegt ist, in seiner Ausschwenkstellung von der Stirnseite (5) mit seinem einen Hebelarm (14) vorsteht, so dass mit ihm ein Anschlagschutz der Türblattkante (6) beim Öffnen der Flügeltür (1) bewerkstelligt ist, wobei der andere Hebelarm (12) mit dem einen Längsende der Schubstange (17) gekuppelt ist und deren anderes Längsende mit einem an der Zarge (7) angebrachten Mitnehmer (21) gekuppelt ist, so dass beim Öffnen der Flügeltür (1) der Hebel (10) von der Einschwenlcstellung in die Ausschwenkstellung und beim Schließen der Flügeltür (1) der Hebel (10) von der Ausschwenkstellung in die Einschwenkstellung von dem Mitnehmer (21) via die Schubstange (17) getrieben ist, **dadurch gekennzeichnet, dass** die Anschlagschutzeinrichtung (9) ein erstes Vorspannmittel (24) aufweist, das an dem Türblatt (2) abgestützt ist und an dem Hebel (10) angreift, so dass, sobald der Hebel (10) von der Zarge (7) freigelegt ist und der Hebel (10) von dem Mitnehmer (21) entkoppelt ist, der Hebel (10) von dem ersten Vorspannmittel (24) in der Ausschwenkstellung gehalten ist.

2. Flügeltür (1) gemäß Anspruch 1, wobei das erste Vorspannmittel (24) als eine Schraubenfeder oder eine Torsionsfeder ausgebildet ist.

3. Flügeltür gemäß Anspruch 1 oder 2, wobei die Anschlagschutzeinrichtung (9) ein zweites Vorspannmittel (22) aufweist, das an der Zarge (7) abgestützt ist und an dem Mitnehmer (21) angreift, wobei diejenige resultierende Vorspannkraft zum Verschwenken des Hebels (10), die von dem zweiten Vorspannmittel (22) an dem Hebel (10) angreift, größer ist als diejenige resultierende Vorspannkraft zum Verschwenken des Hebels (10), die von dem ersten Vorspannmittel (24) an dem Hebel angreift, so das, solange der Hebel (10) von der Zarge. (7) nicht freigelegt ist, der Hebel (10) via den Mitnehmer (21) und die Schubstange (17) von dem zweiten Vorspannmittel (22) in die Einschwenkstellung getrieben ist.

4. Flügeltür (1) gemäß Anspruch 3, wobei das zweite Vorspannmittel (22) als eine Schraubenfeder ausgebildet ist.

5. Flügeltür gemäß Anspruch 3 oder 4, wobei das erste Vorspannmittel (24) an der Schubstange (17) und das zweite Vorspännmittel (22) via den Mitnehmer (21) an der Schubstange (17) angreifen.

6. Flügeltür (1) gemäß einem der Ansprüche 3 bis 5, wobei der Mitnehmer als ein Mitnehmerschlitten (21) ausgeführt ist, der an der Zarge (7) unter Überwinden der Vorspannkraft des zweiten Vorspannmittels (22) längsverSChiebbar ist und an dem ihm zugeordneten Längsende der Schubstange (17) anliegt, solange der Hebel (10) von der Zarge (7) nicht freigelegt ist, und der von dem ihm zugeordneten Längsende der Schubstange (17) im Abstand angeordnet ist, sobald der Hebel (10) von der Zarge (7) freigelegt ist.

7. Flügelttür (1) gemäß Anspruch 6, wobei das Türblatt (2) einen Mitnehmeranschlag (23) aufweist, der derart angeordnet ist, dass, sobald der Hebel (10) von der Zarge (7) freigelegt ist, der Mitnehmer (21) an dem Mitnehmeranschlag (23) anliegt.

8. Flügeltür (1) gemäß einem der Ansprüche 3 bis 5, wobei der Mitnehmer als ein Drückerdorn ausgeführt ist, der in die Zarge (7) unter Überwinden der Vorspannkraft des zweiten Vorspannmittels (22) versenkbar ist und an dem ihm zugeordneten Längsende der Schubstange (17) anliegt, solange der Hebel (10) von der Zarge (7) nicht freigelegt ist, und der von dem ihm zugeordneten Längsende der Schubstange (17) im Abstand angeordnet ist, sobald der Hebel (10) von der Zarge (7) freigelegt ist.

9. Flügeltür (1) gemäß einem der Ansprüche 3 bis 5, wobei der Mitnehmer als ein Schwenkstift ausgeführt ist, der an der Zarge (7) unter Überwinden der Vorspannkraft des zweiten Vorspannmittels (22) verschwenkbar ist und an dem ihm zugeordneten Längsende der Schubstange (17) anliegt, solange der Hebel (10) von der Zarge (7) nicht freigelegt ist, und der von dem ihm zugeordneten Längsende der Schubstange (17) im Abstand angeordnet ist, sobald der Hebel (10) von der Zarge (7) freigelegt ist.

10. Flügeltür (1) gemäß einem der Ansprüche 3 bis 5, wobei der Mitnehmer als ein Kompressionsblock ausgeführt ist, der an der Zarge (7) unter Überwinden der Vorspannkraft des zweiten Vorspannmittels (22) komprimierbar ist und an dem ihm zugeordneten Längsende der Schubstange (17) anliegt, solange der Hebel (10) von der Zarge (7) sicht freigelegt ist, und der von dem ihm zugeordneten Längsende der Schubstange (17) im Abstand angeordnet ist, sobald der Hebel (10) von der Zarge (7) freigelegt ist.

11. Flügeltür (1) gemäß einem der Ansprüche 1 bis 10, wobei der eine Hebelarm (14) ein Polster (28) aufweist, das bei der geöffneten Flügeltür (1) von der Zarge (7) abgewandt angeordnet ist.

12. Flügeltür (1) gemäß einem der Ansprüche 1 bis 11, wobei Die Flügeltür (1) eine Tür eines Kraftfahrzeugs ist.

## Claims

1. Swing door (1) with a door leaf (2), a door jamb (7) and a stop protection device (9) that is built on the front side (5) of the door leaf (2), wherein the front side (5) faces away the hinges (3) of the swing door (1), wherein the stop protection device (9) comprises a push rod (17) and a lever (10) mounted sucht that it is pivotable in the and against the opening direction (4) of the swing door (1), wherein the lever (10) is arranged in a gap (8) between the front side (5) and the door jamb (7) in its pivot in position during the closed swing door (1) and, as soon as the lever (10) is exposed from the door jamb (7) during the opening of the swing door (1), protrudes from the front side (5) with its one lever arm (14) in its pivot out position, so that a stop protection of the door leaf edge (6) is achieved by the lever arm (14) during the opening of the swing door (1), wherein the other lever arm (12) is coupled with the one longitudinal end of the push rod (17) and the other longitudinal end of the push rod (17) is coupled with a driver (21) attached on the door jamb (7), so that the lever (10) is pushed from the pivot in position in the pivot out position during the opening of the swing door (1) and from the pivot out position in the pivot in position during the closing of the swing door (1) by the driver (21) via the push rod (17), **characterized in that** the stop protection device (9) comprises a first biasing means (24) that is supported on the door jamb (2) and engages on the lever (10), so that, as soon as the lever (10) is exposed from the door jamb (7) and the lever (10) is decoupled from the driver (21), the lever (10) is held in the pivot out position by the first biasing means (24).

2. Swing door (1) according to claim 1, wherein the first biasing means (24) is formed as a coil spring or a torsion spring.

3. Swing door according to claim 1 or 2, wherein the stop protection device (9) comprises a second biasing means (22) that is supported on the door jamb (7) and engages on the driver (21), wherein the resulting bias force that engages from the second biasing means (22) on the lever (10) for pivoting the lever (10) is larger than the resulting bias force that engages from the first biasing means (24) on the lever for pivoting the lever (10), so that, as long as the lever (10) is not exposed from the door jamb (7), the lever (10) is pushed in the pivot in position via the driver (21) and the push rod (17) by the second biasing means (22).

4. Swing door (1) according to claim 3, wherein the second biasing means (22) is formed as a coil spring.

5. Swing door according to claim 3 or 4, wherein the first biasing means (24) engages on the push rod (17) and the second biasing means (22) engages on the push rod (17) via the driver (21).

6. Swing door (1) according to any one of claims 3 to 5, wherein the driver is made as a driver slide (21) that can be displaced longitudinally on the door jamb (7) under overcoming the bias force of the second biasing means (22) and that lies on the to the driver (21) assigned longitudinal end of the push rod (17), as long as the lever (10) is not exposed from the door jamb (7), and that is arranged in a distance to the to the driver (21) assigned longitudinal end of the push rod (17), as soon as the lever (10) is exposed from the door jamb (7).

7. Swing door (1) according to claim 6, wherein the door leaf (2) comprises a driver stop (23) that is arranged such that, as soon as the lever (10) is exposed from the door jamb (7), the driver (21) lies on the driver stop (23).

8. Swing door (1) according to any one of claims 3 to 5, wherein the driver is made as a pusher pin that can be sunk in the door jamb (7) under overcoming the bias force of the second biasing means (22) and that lies on the to the driver (21) assigned longitudinal end of the push rod (17), as long as the lever (10) is not exposed from the door jamb (7), and that is arranged in a distance to the to the driver (21) assigned longitudinal end of the push rod (17), as soon as the lever (10) is exposed from the door jamb (7).

9. Swing door (1) according to any one of claims 3 to 5, wherein the driver is made as a pivot bolt that can be pivoted on the door jamb (7) under overcoming the bias force of the second biasing means (22) and that lies on the to the driver (21) assigned longitudinal end of the push rod (17), as long as the lever (10) is not exposed from the door jamb (7), and that is arranged in a distance to the to the driver (21) assigned longitudinal end of the push rod (17), as soon as the lever (10) is exposed from the door jamb (7).

10. Swing door (1) according to any one of claims 3 to 5, wherein the driver is made as a compression block that can be compressed on the door jamb (7) under overcoming the bias force of the second biasing means (22) and that lies on the to the driver (21) assigned longitudinal end of the push rod (17), as long as the lever (10) is not exposed from the door jamb (7), and that is arranged in a distance to the to the driver (21) assigned longitudinal end of the push rod (17), as soon as the lever (10) is exposed from the door jamb (7).

11. Swing door (1) according to any one of claims 1 to 10, wherein the one lever arm (14) comprises a cushion (28) that is arranged facing away the door jamb (7) during the open swing door (1).

12. Swing door (1) according to any one of claims 1 to 11, wherein the swing door (1) is the door of a motor vehicle.

## Revendications

1. Porte pivotante (1) comportant un vantail de porte (2), un châssis (7), un dispositif (9) de protection contre les chocs, qui est monté sur la face d'extrémité (5) du vantail de porte (2) opposée aux charnières (3) de la porte pivotante (1), une tige de poussée (17) et un levier (10) monté de manière pivotante dans la direction d'ouverture (4) de la porte pivotante (1) et en sens contraire de cette direction, ledit levier étant dans une position escamotée lorsque la porte pivotante (1) est fermée, et disposé dans un espace (8) aménagée entre la face d'extrémité (5) et le châssis (7), et le levier (10), lors de l'ouverture de la porte pivotante (1), étant dégagé du châssis (7) et dans une position de pivotement telle qu'il fait saillie de la face d'extrémité (5) au moyen d'un bras (14) d'un levier, de sorte que, grâce audit levier, une protection contre les chocs de l'arête (6) du vantail de porte est réalisée lors de l'ouverture de cette porte, l'autre bras (12) du levier étant relié à l'une des extrémités longitudinales de la tige de poussée (17) et, par son autre extrémité longitudinale à un entraîneur coulissant (21) disposé sur le châssis (7), de sorte que, lors de l'ouverture de la porte pivotante (1), le levier (10) est entraîné, par l'entraîneur coulissant (21) par l'intermédiaire de la tige de poussée (17), **caractérisé en ce que** le dispositif (9) de protection contre les chocs comprend un premier moyen de sollicitation (24) fixé au vantail de porte (2) et venant en application sur le levier (10), de telle sorte que, lorsque le levier (10) est dégagé du châssis (7) et que le levier (10) est désengagé de l'entraîneur coulissant (21), le levier (10) est maintenu dans la position de saillie par les premiers moyens de sollicitation (24).

2. Porte pivotante (1) selon la revendication 1, dans laquelle le premier moyen de sollicitation (24) est sous la forme d'un ressort hélicoïdal ou d'un ressort de torsion.

3. Porte pivotante selon la revendication 1 ou la revendication 2, dans laquelle le dispositif (9) de protection contre les chocs comprend un deuxième moyen de sollicitation (22) prenant appui contre le châssis (7) et venant en application contre l'entraîneur coulissant (21), la force de sollicitation ayant pour effet de faire pivoter le levier (10) du fait de la force selon laquelle ledit deuxième moyen de sollicitation (22) agit sur le levier (10), cette force étant supérieure à la force nécessaire pour réaliser le basculement du levier (10) résultant de ladite force selon laquelle ledit premier moyen de sollicitation (24) agit sur le levier, de sorte que, tant que le levier (10) n'est pas dégagé du châssis (7), le levier (10), par l'intermédiaire de l'entraîneur coulissant (21) et de la tige de poussée (17) est actionné en position escamotée par le deuxième moyen de sollicitation (22).

4. Porte pivotante (1) selon la revendication 3, dans laquelle le deuxième moyen de sollicitation (22) est sous la forme d'un ressort hélicoïdal.

5. Porte pivotante selon la revendication 3 ou la revendication 4, dans laquelle le premier moyen de sollicitation (24) est appliqué sur la tige de poussée (17) et le deuxième moyen de sollicitation (22) est appliqué sur la tige de poussée (17) par l'intermédiaire de l'entraîneur coulissant (21).

6. Porte pivotante (1) selon l'une quelconque des revendications 3 à 5, dans laquelle l'entraîneur coulissant est mis en oeuvre sous la forme d'un taquet coulissant (21), qui est positionné sur le châssis (7) est qui est déplaçable longitudinalement en surmontant la force de sollicitation du deuxième moyen de sollicitation (22), et qui appui contre l'extrémité longitudinale associée de la tige de poussée (17), aussi longtemps que le levier (10) n'est pas dégagé du châssis (7), ledit taquet étant placé à distance de l'extrémité longitudinale associée de la tige de poussée (17) dès que le levier (10) est dégagé du châssis (7).

7. Porte pivotante (1) selon la revendication 6, dans laquelle le vantail de porte (2) comporte une butée d'entraîneur (23) qui est agencée de telle sorte que, lorsque le levier (10) est dégagé du châssis (7), l'entraîneur coulissant (21) appuie contre la butée d'entraîneur (23).

8. Porte pivotante (1) selon l'une quelconque des revendications 3 à 5, dans laquelle l'entraîneur coulissant est mis en oeuvre sous la forme d'un mandrin poussoir dans le châssis (7), cet entraîneur étant apte à être rétracté en surmontant la force de sollicitation exercée par le deuxième moyen de sollicitation (22) et appuie contre l'extrémité longitudinale associée de la tige de poussée (17) tant que le levier (10) n'est pas dégagé du châssis (7), et ledit entraîneur étant disposé à distance de l'extrémité longitudinale associée de la tige de poussée (17) au fur et à mesure le levier (10) est dégagé du châssis (7).

9. Porte pivotante (1) selon l'une quelconque des revendications 3 à 5, dans laquelle l'entraîneur est mis en oeuvre sous la forme d'un axe de pivotement positionné sur le châssis (7), ledit entraîneur étant apte à pivoter en surmontant la force de sollicitation exercée par le deuxième moyen de sollicitation (22) et appuyant contre l'extrémité longitudinale associée de la tige de poussée (17) tant que le levier (10) n'est pas dégagé du châssis (7), ledit entraîneur étant placé à distance de l'extrémité longitudinale associée de la tige de poussée (17) au fur et à mesure le levier (10) est dégagé du châssis (7).

10. Porte pivotante (1) selon l'une quelconque des revendications 3 à 5, dans laquelle l'entraîneur est mis en oeuvre sous la forme d'un bloc de compression positionné sur le châssis (7), ledit entraîneur étant compressible en surmontant la force de sollicitation exercée par le deuxième moyen de sollicitation (22) et appuyant contre l'extrémité longitudinale associée de la tige de poussée (17) tant que le levier (10) n'est pas dégagé du châssis (7), ledit entraîneur étant placé à distance de l'extrémité longitudinale associée de la tige de poussée (17) dès que le levier (10) est dégagé du châssis (7).

11. Porte pivotante (1) selon l'une quelconque des revendications 1 à 10, dans laquelle le bras formant levier (14) comporte un patin (28) qui est en saillie lorsque la porte pivotante (1) est ouverte et à distance du châssis (7).

12. Porte pivotante (1) selon l'une quelconque des revendications 1 à 12, dans laquelle ladite porte (1) est la porte d'un véhicule automobile.
